# EUROPEAN PATENT APPLICATION

(11) **EP 3 496 369 A1**
(43) Date of publication of application: **12.06.2019**
(21) Application number: 18202507.2
(22) Date of filing: 25.10.2018
(51) Int. Cl.: H04L 29/08

(54) **IN-VEHICLE RELAY DEVICE, INFORMATION PROCESSING DEVICE, RELAY DEVICE, INFORMATION PROCESSING METHOD, NON-TRANSITORY STORAGE MEDIUM STORING PROGRAM EXECUTABLE BY RELAY DEVICE, INFORMATION PROCESSING SYSTEM, VEHICLE, AND EXTERNAL DEVICE**

(30) Priority: 04.12.2017 JP 2017232914
(71) Applicant: TOYOTA JIDOSHA KABUSHIKI KAISHA, Toyota-shi, Aichi-ken, 471-8571 (JP)
(72) Inventor: TAUCHI, Jun, Toyota-shi, Aichi-ken, 471-8571 (JP)
(74) Representative: Kuhnen & Wacker Patent- und Rechtsanwaltsbüro PartG mbB

(57) **Abstract**

An in-vehicle relay device (20), an information processing device (10), a relay device (20), an information processing method, a non-transitory storage medium storing a program executable by a relay device (20), an information processing system (1), a vehicle (1001), and an external device (2000) are disclosed. The in-vehicle relay device (20) relays communication between a plurality of in-vehicle devices (10) connected to an in-vehicle network mounted on a vehicle (1001). The in-vehicle relay device (20) includes a transmission part (24) configured to transmit, based on a signal from an external device (2000) disposed outside the vehicle (1001), first data stored in a first device that is one of the plurality of in-vehicle devices (10), and second data transmitted and received between the plurality of in-vehicle devices (10), to the external device (2000).

## Description

### BACKGROUND OF THE INVENTION

### 1. Field of the Invention

The invention relates to an in-vehicle relay device, an information processing device, a relay device, an information processing method, a non-transitory storage medium storing a program executable by a relay device, an information processing system, a vehicle, and an external device.

### 2. Description of Related Art

For the purpose of diagnosing a failure or the like in a network system, such as an in-vehicle system, techniques of recording data transmitted and received in an internal network and transmitting the recorded data to an external network by wireless communication have been used (e.g., *see* Japanese Unexamined Patent Application Publication No. 2003-229874 (JP 2003-229874 A)).

### SUMMARY OF THE INVENTION

The external device according to the aforementioned techniques cannot acquire data that is not transmitted or received among devices, from the outside by wireless communication or the like.

The invention provides a technique capable of causing an external device to acquire predetermined data by wireless communication or the like.

A first aspect of the invention provides an in-vehicle relay device configured to relay communication between a plurality of in-vehicle devices connected to an in-vehicle network, each of the plurality of in-vehicle devices being mounted on a vehicle. The in-vehicle relay device includes: a transmission part configured to transmit, based on a signal from an external device disposed outside the vehicle, first data stored in a first in-vehicle device that is one of the plurality of in-vehicle devices, and second data transmitted and received between the plurality of in-vehicle devices, to the external device.

According to the first aspect, in accordance with an instruction from the external device, the data stored in the in-vehicle devices and the data transmitted and received between the in-vehicle devices are transmitted to the external device by wireless communication. Accordingly, it is possible to cause the external device to acquire predetermined data.

In the in-vehicle relay device according to the first aspect, the first data may include data that is not transmitted and received between the plurality of in-vehicle devices.

With the above configuration, in accordance with an instruction from the external device, the data that is stored in the in-vehicle devices and not transmitted and received between the in-vehicle devices is transmitted to the external device by wireless communication. Accordingly, it is possible to cause the external device to acquire predetermined data not transmitted and received between the in-vehicle devices.

In the in-vehicle relay device according to the first aspect, the transmission part may be configured to transmit, at a timing specified by the external device, a most-recently-acquired first data and a most-recently-acquired second data to the external device for each type of the first data and the second data.

With the above configuration, at the timing specified by the external device, the latest data stored in the in-vehicle devices and the data transmitted and received between the in-vehicle devices are transmitted to the external device by wireless communication. Accordingly, it is possible to cause the external device to acquire the latest predetermined data.

In the in-vehicle relay device according to the first aspect, the signal may include an indication of a cycle of data transmission; the first data may be acquired from the first in-vehicle device at a cycle of a length equal to or shorter than a half of the cycle of data transmission; and the transmission part may be configured to transmit the first data and the second data to the external device at the cycle of data transmission.

With the above configuration, the relay device acquires the first data at a cycle equal to or shorter than a half of the cycle at which the data is transmitted to the external deice. Accordingly, the possibility of re-transmitting the same data can be reduced even when the relay device and the information processing device are not synchronized and timers of the relay device and the information processing device deviate from each other.

In the in-vehicle relay device according to the first aspect, the signal may include information on a memory address of the first in-vehicle device and the first data may be data stored in the memory address of the first in-vehicle device.

With the above configuration, in accordance with an instruction from the external device, the data stored in a physical memory or a virtual memory of the in-vehicle device is transmitted to the external device by wireless communication. Accordingly, it is possible to cause the external device to acquire predetermined data stored inside the in-vehicle device.

In the in-vehicle relay device according to the first aspect, the signal may include identification information on a type of a message transmitted from the first in-vehicle device and information specifying an item of data included in the message; and the second data may be data of the item, the data of the item being included in the message transmitted and received between the plurality of in-vehicle devices.

With the above configuration, in accordance with an instruction from the external device, the predetermined data included in the data transmitted and received between the in-vehicle devices is transmitted to the external device by wireless communication. Accordingly, it is possible to cause the external device to acquire predetermined data transmitted and received between the in-vehicle devices.

A second aspect of the invention provides an information processing device connected to an internal network to which a plurality of devices and a relay device are connected, the relay device being configured to relay communication between the plurality of devices. The information processing device includes: a transmission part configured to, based on a signal transmitted from an external device by wireless communication, transmit first data stored in one of the plurality of devices connected to the internal network, and second data transmitted and received between the plurality of devices, to the external device.

A third aspect of the invention provides a relay device configured to relay communication between a plurality of devices connected to an internal network. The relay device includes: a transmission part configured to, based on a signal transmitted from an external device by wireless communication, transmit first data stored in one of the plurality of devices connected to the internal network, and second data transmitted and received between the plurality of devices, to the external device.

A fourth aspect of the invention provides an information processing method, including: receiving, by a relay device configured to relay communication between a plurality of devices connected to an internal network, a signal transmitted from an external device by wireless communication; and transmitting, by the relay device, first data stored in one of the plurality of devices connected to the internal network and second data transmitted and received between the plurality of devices, to the external device based on the signal.

A fifth aspect of the invention provides a non-transitory storage medium storing a program executable by a relay device configured to relay communication between a plurality of devices connected to an internal network. When the program is executed by the relay device, the program causes the relay device to perform, based on a signal transmitted from an external device by wireless communication, a process of transmitting first data stored in one of the plurality of devices connected to the internal network and second data transmitted and received between the devices to the external device.

A sixth aspect of the invention provides an information processing system, including: a plurality of devices connected to an internal network; a wireless communication device; and a relay device configured to relay communication between the plurality of devices. The relay device includes a transmission part configured to transmit, based on a signal transmitted from an external device by wireless communication, first data stored in one of the plurality of devices connected to the internal network and second data transmitted and received between the plurality of devices, to the external device via the wireless communication device. The wireless communication device is configured to relay communication between the relay device and the external device. A first device included in the plurality of devices is configured to transmit the first data stored in the first device to the relay device according to a request from the relay device. A second device included in the plurality of devices is configured to transmit the second data to another one of the plurality of devices via the relay device.

A seventh aspect of the invention provides a vehicle including the in-vehicle relay device according to the first aspect.

A eighth aspect of the invention provides a vehicle including the information processing system according to the sixth aspect.

A ninth aspect of the invention provides an external device disposed outside a vehicle, including: a transmission part configured to transmit a signal to an in-vehicle relay device that is configured to relay communication between a plurality of in-vehicle devices connected to an in-vehicle network mounted on the vehicle; and an acquisition part configured to acquire first data stored in one of the plurality of in-vehicle devices connected to the in-vehicle network and second data transmitted and received between the plurality of in-vehicle devices, the first data and the second data being acquired by the in-vehicle relay device based on the signal.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram illustrating a configuration example of a communication system according to an embodiment;
FIG. 2 is a diagram illustrating a hardware configuration example of an information processing device, a relay device, and an external device according to the embodiment;
FIG. 3 is a diagram showing an example of functional blocks of the information processing device, the relay device, and the external device according to a first embodiment;
FIG. 4 is a sequence diagram showing an example of processing of a communication system according to the first embodiment;
FIG. 5 is a diagram showing an example of acquisition list data according to the embodiment;
FIG. 6 is a diagram showing an example of extraction list data according to the embodiment;
FIG. 7 is a diagram showing an example of functional blocks of the information processing device, the relay device, and the external device according to a second embodiment; and
FIG. 8 is a sequence diagram showing an example of processing of a communication system according to the second embodiment.

### DETAILED DESCRIPTION OF EMBODIMENTS

Embodiments of the invention will be described below with reference to the drawings.

### [First Embodiment] <System Configuration>

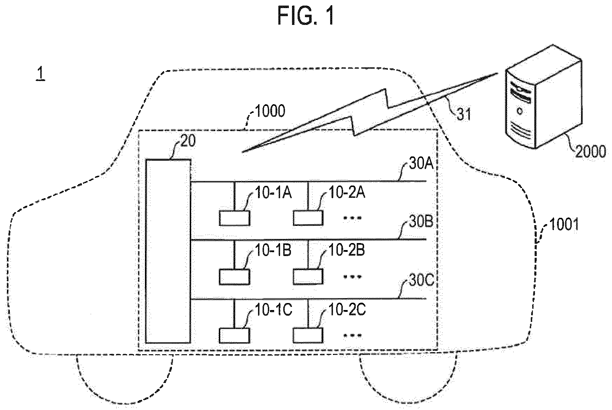

FIG. 1 is a diagram showing a configuration example of a communication system 1 according to an embodiment. In FIG. 1, the communication system 1 includes an information processing system 1000 and an external device 2000. The information processing system 1000 and the external device 2000 are connected with each other by, an external network 31, for example, a mobile telephone network, such as Long Term Evolution (LTE), or a wireless local area network (LAN).

The information processing system 1000 is, for example, a system mounted on a vehicle 1001 or the like. Further, the external device 2000 is, for example, a center server or the like that manages information of the vehicle 1001 or the like. The external device 2000 acquires, from the information processing system 1000, data on user's operations, such as an accelerator operation, a brake operation, a handle operation, and a shift lever operation, and a data on behavior of the vehicle 1001, such as an acceleration, a yaw rate, a position information acquired by Global Positioning System (GPS) or the like, and a vehicle speed. In addition, the external device 2000 performs, for example, a cause analysis when a fault occurs in the information processing system 1000, and a big data analysis for automated driving or the like, based on the data acquired from the information processing system 1000.

The information processing system 1000 includes an internal network 30A, an internal network 30B, an internal network 30C, and ... (hereinafter simply referred to as "internal networks 30" when it is not necessary to distinguish the internal networks from one another). The number of internal networks 30 is not limited to the example of FIG. 1.

The information processing system 1000 further includes an information processing device 10-1A, an information processing device 10-2A, and ... which are connected to the internal network 30A, an information processing device 10-1B, an information processing device 10-2B, and ... which are connected to the internal network 30B, and an information processing device 10-1C, an information processing device 10-2C, and ... which are connected to the internal network 30C (hereinafter simply referred to as "information processing devices 10" when it is not necessary to distinguish the information processing devices from one another). The number of information processing devices 10 is not limited to the example of FIG. 1.

In this regard, the information processing device 10-1A is a data communication module (DCM) (an example of an "in-vehicle wireless communication device" or a "wireless communication device") that relays communication with the external device 2000 using wireless communication, such as LTE, and communication in the information processing system 1000 using the internal networks 30.

The information processing system 1000 further includes a relay device 20 that relays communication between the internal networks 30.

Hereinafter, as an example of the information processing system 1000, the information processing system 1000 that is mounted on the vehicle 1001 will be described. Specifically, an in-vehicle system, in which an in-vehicle device (in-vehicle electronic control unit (ECU) as an example of the information processing device 10 is connected to an in-vehicle LAN (in-vehicle network) (an example of an "internal network") that makes use of a network, such as a controller area network (CAN) or an Ethernet (registered trademark), via an in-vehicle relay device as an example of the relay device 20, will be described by way of example.

However, the disclosed technique is applicable to various kinds of devices and various kinds of relay devices in the information processing system 1000 that may be various kinds of network systems, for example, a network system for device control in a device such as a robot or the like, a network system for device control in a factory or the like, and an Internet of Things (IoT) system for connecting a sensor or the like to a cloud or the like.

The information processing devices 10 other than the information processing device 10-1A are, for example, an ECU that performs brake control or an ECU that transmits data acquired by a sensor.

The relay device 20 is, for example, a gateway used in an in-vehicle network to which an in-vehicle device is communicably connected.

### <Hardware Configuration>

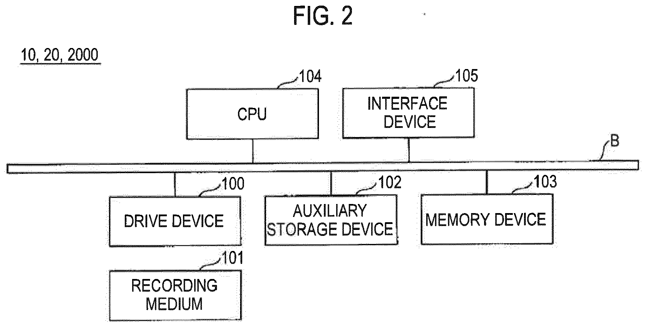

FIG. 2 is a diagram showing an example of a hardware configuration of the information processing device 10, the relay device 20 and the external device 2000 according to the embodiment. Hereinafter, the relay device 20 will be described as an example. The relay device 20 shown in FIG. 2 includes a drive device 100, an auxiliary storage device 102, a memory device 103, a central processing unit (CPU) 104, an interface device 105 and the like, which are mutually connected by a bus B.

An information processing program for realizing a process in the relay device 20 is provided by, for example, a recording medium 101. When the recording medium 101 storing the information processing program is set in the drive device 100, the information processing program is installed from the recording medium 101 to the auxiliary storage device 102 via the drive device 100. However, it is not essential to install the information processing program from the recording medium 101. The information processing program may be downloaded from another computer via a network. The auxiliary storage device 102 stores the installed information processing program together with necessary files, data, and the like.

The memory device 103 is, for example, a random access memory (RAM). When a program startup instruction is given, the memory device 103 reads a program from the auxiliary storage device 102 and stores the program. The CPU 104 implements functions of the relay device 20 according to the program stored in the memory device 103. The interface device 105 is used as an interface for connection to a network. The interface device 105 is provided, for example, for each of a plurality of network ports provided in the relay device 20.

An example of the recording medium 101 includes a portable recording medium, such as a CD-ROM, a DVD disk, or a USB memory. An example of the auxiliary storage device 102 includes a hard disk drive (HDD) or a flash memory. Each of the recording medium 101 and the auxiliary storage device 102 corresponds to a computer-readable recording medium.

The hardware configurations of the information processing device 10 and the external device 2000 may be the same as that of the relay device 20. The information processing devices 10 other than the information processing device 10-1A and the external device 2000 may be configured to include only one interface device 105.

### <Functional Configuration>

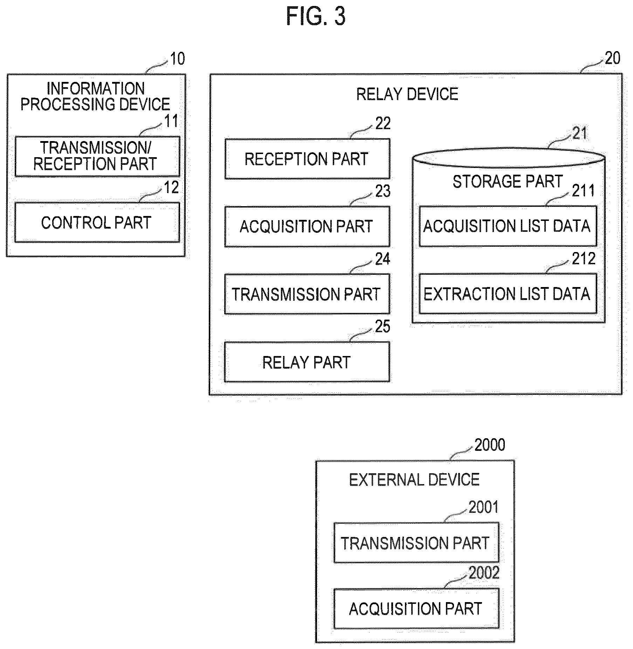

Next, functional configurations of the information processing device 10, the relay device 20, and the external device 2000 according to a first embodiment will be described with reference to FIG. 3. FIG. 3 is a diagram showing an example of functional blocks of the information processing device 10, the relay device 20, and the external device 2000 according to a first embodiment.

### <<Information Processing Device>>

The information processing device 10 includes a transmission/reception part 11 and a control part 12. The transmission/reception part 11 and the control part 12 represent functions realized by processes executed by a CPU of the information processing device 10 according to one or more programs installed in the information processing device 10.

In accordance with an instruction from the control part 12, the transmission/reception part 11 performs communication with other information processing devices 10 and the relay device 20.

The control part 12 causes the transmission/reception part 11 to transmit data (hereinafter referred to as "notification data") (an example of "second data") detected by a sensor included in the information processing device 10, to other information processing devices 10. Further, in accordance with a request from the relay device 20, the control part 12 causes the transmission/reception part 11 to transmit internal data (an example of "first data") used for performing a process in the information processing device 10 and stored in the memory device, the auxiliary storage device, or the like, to the relay device 20.

### << Relay Device >>

The relay device 20 includes a storage part 21. The storage part 21 is realized by using, for example, the auxiliary storage device 102. The storage part 21 stores acquisition list data 211, extraction list data 212, and the like received from the external device 2000. The data stored in the acquisition list data 211 and the extraction list data 212 will be described later.

The relay device 20 further includes a reception part 22, an acquisition part 23, a transmission part 24, and a relay part 25. The reception part 22, the acquisition part 23, the transmission part 24, and the relay part 25 represent functions realized by processes executed by the CPU 104 of the relay device 20 according to one or more programs installed in the relay device 20.

The reception part 22 receives a signal (instruction) from the external device 2000 via the information processing device 10-1A as a DCM connected to the internal networks 30 and the external network 31.

Based on the signal transmitted from the external device 2000 and acquired by the reception part 22, the acquisition part 23 acquires internal data stored in the information processing device 10 connected to the internal networks 30 and the notification data to be transmitted and received between a plurality of information processing devices 10, and stores the internal data and the notification data in the storage part 21.

The transmission part 24 transmits the internal data and the notification data acquired by the acquisition part 23 to the external device 2000 via the information processing device 10-1A and the external network 31.

The relay part 25 relays communication between the plurality of information processing devices 10 connected to the respective internal networks 30.

### << External Device >>

The external device 2000 includes a transmission part 2001 and an acquisition part 2002. The transmission part 2001 and the acquisition part 2002 represent functions realized by processes executed by the CPU of the external device 2000 according to one or more programs installed in the external device 2000.

The transmission part 2001 transmits a signal to the relay device 20 via the information processing device 10-1A. Based on the signal, the acquisition part 2002 acquires the internal data and the notification data acquired by the relay device 20, via the information processing device 10-1A.

### <Processing>

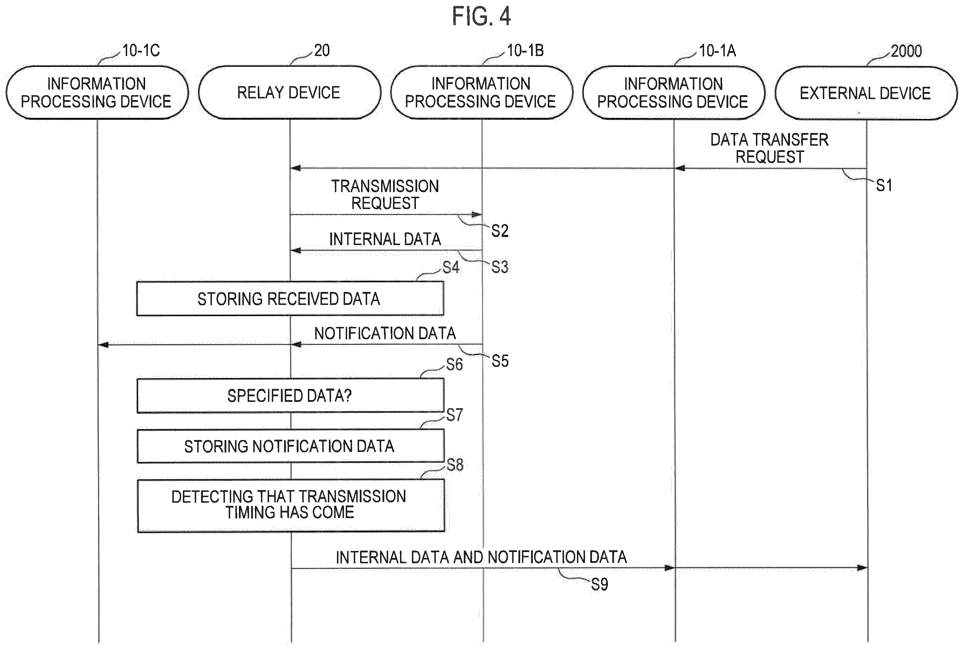

Next, processing of the communication system 1 according to the first embodiment will be described with reference to FIGS. 4 to 6. FIG. 4 is a sequence diagram showing an example of the processing of the communication system 1 according to the first embodiment.

In step S1, the reception part 22 of the relay device 20 receives a data transfer request from the external device 2000 via the information processing device 10-1A. The data transfer request includes the acquisition list data 211 and the extraction list data 212.

The acquisition list data 211 specifies internal data that is to be acquired by the relay device 20 from the respective information processing devices 10 connected to the in-vehicle internal networks 30 and to be transmitted to the external device 2000. The internal data may be data stored in the respective information processing devices 10 connected to the in-vehicle internal networks 30 and not transmitted or received on the internal networks 30.

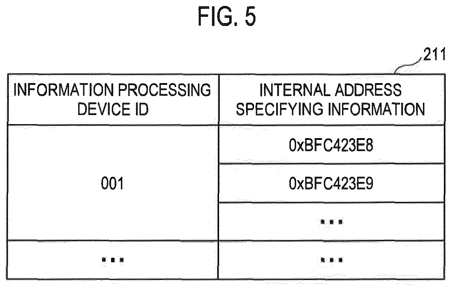

FIG. 5 is a diagram showing an example of the acquisition list data 211 according to the embodiment. The acquisition list data 211 shown in FIG. 5 includes one or more pieces of data including an information processing device ID and internal address specifying information. The information processing device ID is identification information (ID) of the information processing device 10. The internal address specifying information is information for identifying the data stored in the information processing device 10 and may be, for example, a memory address (physical address or logical address) of a memory device of the information processing device 10. In the information processing device 10, the memory address is managed in units of, for example, one byte.

In the example of FIG. 5, it is specified that the relay device 20 acquires data having the memory addresses of "0xBFC423E8," "0xBFC423E9," and the like from the information processing device 10 having the information processing device ID of "0001" and transmits the data to the external device 2000. It is known, at the time of designing the information processing device 10, that which type of data is stored in a certain physical address in the memory device.

The extraction list data 212 specifies data that is to be extracted by the relay device 20 from communication message (communication data) transmitted and received on the in-vehicle internal networks 30 and to be transmitted to the external device 2000.

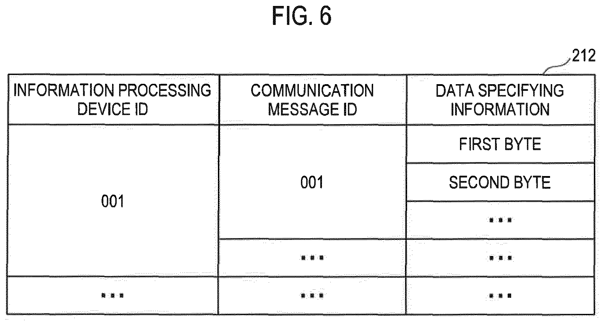

FIG. 6 is a diagram showing an example of the extraction list data 212 according to the embodiment. The extraction list data 212 shown in FIG. 6 includes one or more pieces of data including the information processing device ID, a communication message ID, and data specifying information. The information processing device ID is identification information (ID) of the information processing device 10. The communication message ID is identification information (ID) of a type of a message transmitted from the information processing device 10. The data specifying information is information for identifying an item of data to be acquired in a message transmitted from the information processing device 10.

In the example of FIG. 6, it is specified that the relay device 20 extracts, from the in-vehicle internal networks 30, data of a first byte, a second byte, and the like included in a message having the communication message ID of "001" of the information processing device 10 having the information processing device ID of "0001" and transmits the data to the external device 2000.

For example, it is assumed that the message having the communication message ID of "001" is a message transmitted from a vehicle stability control (VSC), which is an ECU for performing brake-related control, on the internal networks 30 using a CAN or the like. It is further assumed that the message includes data such as a wheel speed of a right front wheel, a wheel speed of a front left wheel, a wheel speed of a rear right wheel, a wheel speed of a rear left wheel, and an average vehicle body speed, on a one byte basis in order. In this case, in the example of FIG. 6, data such as the wheel speed of the front right wheel, the wheel speed of the front left wheel, and the like are extracted as data of a first byte, a second byte, and the like included in the message, and are transmitted to the external device 2000.

Subsequently, the acquisition part 23 of the relay device 20 transmits a transmission request of the internal data of the type specified with respect to each information processing device 10 in the acquisition list data 211 to a corresponding one of the information processing devices 10 (step S2). In the example of FIG. 4, the transmission request is transmitted to the information processing device 10-1B.

The acquisition part 23 of the relay device 20 may acquire data from the information processing devices 10 using, for example, CAN Calibration Protocol (CCP) / Universal Measurement and Calibration Protocol (XCP) standardized by Association for Standardization of Automation and Measuring Systems (ASAM).

The acquisition part 23 of the relay device 20 may also acquire data from the information processing devices 10 using a diagnostic function (On-Board Diagnostics (OBD)) possessed by the information processing devices 10.

When the external device 2000 requests transmission of the internal data to the external device 2000 at a predetermined cycle (e.g., every one second), the acquisition part 23 of the relay device 20 may perform the processing of step S2 at a cycle equal to or shorter than a half (e.g., 0.5 second) of the predetermined cycle.

Alternatively, the acquisition part 23 of the relay device 20 may transmit a request to transmit a specified type of internal data at a cycle equal to or shorter than a half of the predetermined cycle, to each information processing device 10. This eliminates the need to repeatedly transmit internal data transmission requests. Therefore, it is possible to reduce consumption of communication bands. Since the internal data is transmitted at a cycle equal to or shorter than a half of the predetermined cycle, the possibility of re-transmitting the same data can be reduced even when the relay device 20 and the information processing device 10 are not synchronized and timers of the relay device 20 and the information processing device 10 deviate from each other.

Subsequently, the control part 12 of each information processing device 10 transmits the specified type of internal data to the relay device 20 (step S3). As a result, the data stored in the memory address or the like specified by the acquisition list data 211 is transmitted.

Subsequently, the acquisition part 23 of the relay device 20 stores the internal data received from each information processing device 10 in the storage part 21 (step S4). The acquisition part 23 of the relay device 20 stores the most-recently-acquired internal data for each type of the received internal data. As a result, the latest internal data of each type is transmitted to the external device 2000.

Subsequently, upon receiving a notification data that is transmitted from one information processing device 10 connected to one internal network 30 to the other information processing device 10 connected to the other internal network 30, the relay part 25 of the relay device 20 transmits the received notification data to the other information processing device 10 (step S5). In the example of FIG. 4, the notification data is transmitted from the information processing device 10-1B to the information processing device 10-1C.

Subsequently, the acquisition part 23 of the relay device 20 determines whether or not the notification data relayed by the relay part 25 is the data specified by the extraction list data 212 (step S6). If the notification data is the specified data, the acquisition part 23 stores the received notification data in the storage part 21 (step S7). The acquisition part 23 of the relay device 20 stores the most-recently-acquired notification data for each type of the received notification data. As a result, the most recent notification data of each type is transmitted to the external device 2000. When the notification data is not the specified data, the acquisition part 23 of the relay device 20 does not store the notification data in the storage part 21.

Subsequently, when it is detected that the transmission timing specified by the external device 2000 has come (step S8), the transmission part 24 of the relay device 20 transmits the internal data and the notification data stored in the storage part 21 to the external device 2000 via the information processing device 10-1A (step S9).

The relay device 20 may first execute either the processing of steps S2 to S4 or the processing of steps S5 to S8, or may the processing of steps S2 to S4 and the processing of steps S5 to S8 in parallel.

### [Second Embodiment]

In the first embodiment, an example in which the relay device 20 acquires the internal data of the information processing device 10 has been described. In the second embodiment, description will be made on an example in which one information processing device 10 acquires the internal data of another information processing device 10. According to the second embodiment, it is possible to cause the external device to acquire predetermined data.

Since the second embodiment is the same as the first embodiment except a part thereof, the description will be appropriately omitted. In the following, the description of the parts common to the first embodiment will be omitted, and only different parts will be described.

### <Functional Configuration>

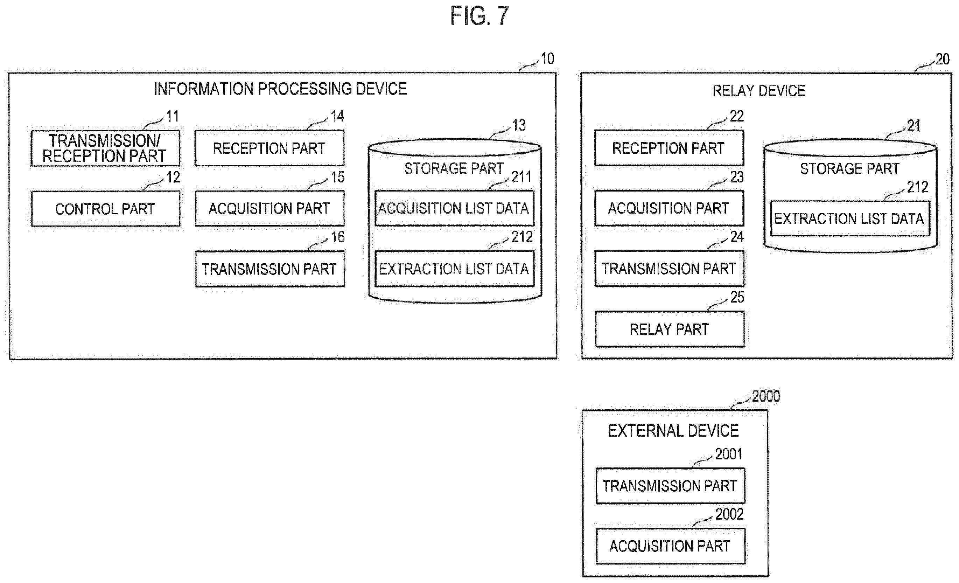

Next, functional configurations of the information processing device 10, the relay device 20, and the external device 2000 according to the second embodiment will be described with reference to FIG. 7. FIG. 7 is a diagram showing an example of functional blocks of the information processing device 10, the relay device 20, and the external device 2000 according to the second embodiment.

### <<Information Processing Device>>

Hereinafter, the functional configuration of one information processing device 10 among a plurality of information processing devices 10 included in the information processing system 1000 will be described. Among the plurality of information processing devices 10, the information processing devices 10 other than the one information processing device 10 may be the same as the information processing devices 10 according to the first embodiment.

In the second embodiment, the one information processing device 10 further includes a storage part 13. The storage part 13 is realized by using, for example, an auxiliary storage device. The storage part 13 stores the acquisition list data 211, the extraction list data 212, and the like received from the external device 2000.

The one information processing device 10 further includes a reception part 14, an acquisition part 15, and a transmission part 16. The reception part 14, the acquisition part 15, and the transmission part 16 represent functions realized by processes executed by the CPU of the information processing device 10 according to one or more programs installed in the information processing device 10.

The reception part 14 receives a signal from the external device 2000 via the external network 31 or the like.

The acquisition part 15 acquires the internal data stored in the information processing device 10 connected to the internal network 30 based on the signal from the external device 2000 acquired by the reception part 14, and stores the acquired internal data in the storage part 13. Further, the acquisition part 15 acquires the notification data transmitted and received among the plurality of information processing devices 10 from the relay device 20, and stores the acquired notification data in the storage part 13.

The transmission part 16 transmits the internal data and the notification data acquired by the acquisition part 15 to the external device 2000 via the external network 31 or the like.

### << Relay Device >>

The storage part 21 of the relay device 20 according to the second embodiment stores the extraction list data 212 and the like received from the external device 2000.

The reception part 22 of the relay device 20 according to the second embodiment receives a signal from the external device 2000 via the information processing device 10-1A, which is a DCM connected to the internal network 30, and the external network 31.

The acquisition part 23 of the relay device 20 according to the second embodiment acquires the notification data transmitted and received among the plurality of information processing devices 10 based on the signal from the external device 2000 acquired by the reception part 22.

The transmission part 24 of the relay device 20 according to the second embodiment transmits the notification data acquired by the acquisition part 23 to the information processing device 10-1A.

### <Processing>

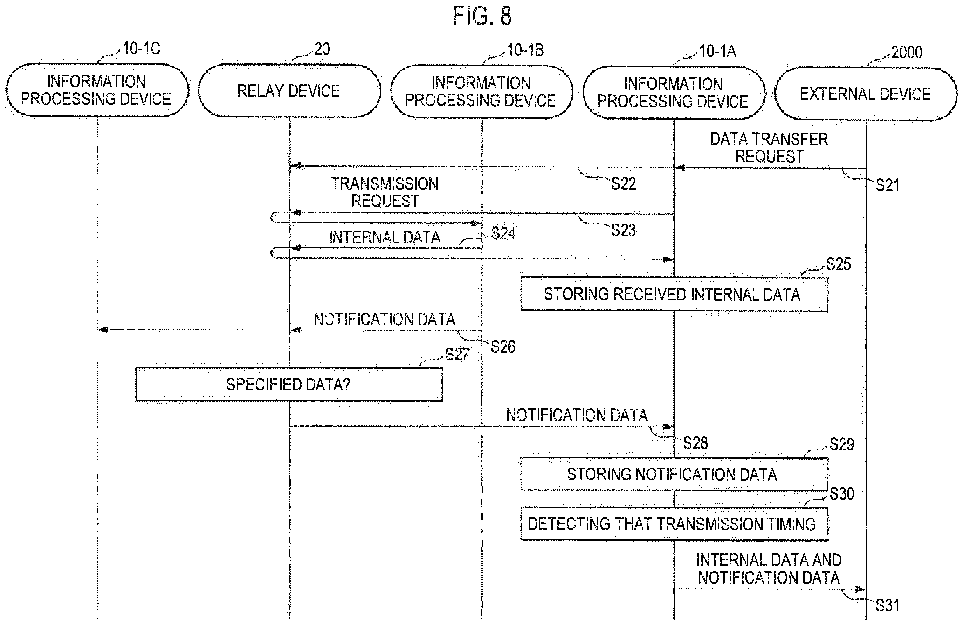

Next, processing of the communication system 1 according to the second embodiment will be described with reference to FIG. 8. FIG. 8 is a sequence diagram showing an example of processing of the communication system 1 according to the second embodiment. In the following description, description will be made on an example in which the information processing device 10-1A, which is a DCM connected to the internal network 30, is the above-described one information processing device 10. However, the above-described one information processing device 10 may be one of the information processing devices 10 other than the information processing device 10-1A.

In step S21, the reception part 14 of the information processing device 10-1A receives a data transfer request from the external device 2000.

Subsequently, the information processing device 10-1A transmits a data transfer request including the extraction list data 212 included in the received data transfer request to the relay device 20 (step S22).

Subsequently, the acquisition part 15 of the information processing device 10-1A transmits a transmission request of the internal data of the type specified with respect to each information processing device 10 in the acquisition list data 211 to a corresponding one of the information processing devices 10 (step S23). In the example of FIG. 8, the transmission request is transmitted to the information processing device 10-1B.

Subsequently, the control part 12 of the information processing device 10-1B transmits the internal data of the specified type to the information processing device 10-1A via the relay device 20 (step S24).

Subsequently, the acquisition part 15 of the information processing device 10-1A stores the internal data received from each information processing device 10 in the storage part 13 (step S25).

Subsequently, upon receiving a notification data that is transmitted from one information processing device 10 connected to one internal network 30 to the other information processing device 10 connected to the other internal network 30, the relay part 25 of the relay device 20 transmits the received notification data to the other information processing device 10 (step S26). In the example of FIG. 8, the notification data is transmitted from the information processing device 10-1B to the information processing device 10-1C.

Subsequently, the acquisition part 23 of the relay device 20 determines whether or not the notification data relayed by the relay part 25 is the data specified by the extraction list data 212 (step S27). If the notification data is the specified data, the acquisition part 23 transmits the notification data to the information processing device 10-1A (step S28).

Subsequently, the acquisition part 15 of the information processing device 10-1A stores the received notification data in the storage part 13 (step S29).

Subsequently, when it is detected that the transmission timing specified by the external device 2000 has come (step S30), the transmission part 16 of the information processing device 10-1A transmits the notification data stored in the storage part 13 to the external device 2000 (step S31).

While embodiments of the invention have been described in detail above, the invention is not limited to such specific embodiments. Various modifications or changes may be made within the scope of the gist of the invention recited in the claims.

## Claims

1. An in-vehicle relay device (20) configured to relay communication between a plurality of in-vehicle devices (10) connected to an in-vehicle network, each of the plurality of in-vehicle devices (10) being mounted on a vehicle (1001), the in-vehicle relay device (20) comprising:
a transmission part (24) configured to transmit, based on a signal from an external device (2000) disposed outside the vehicle (1001), first data stored in a first in-vehicle device that is one of the plurality of in-vehicle devices (10), and second data transmitted and received between the plurality of in-vehicle devices (10), to the external device (2000).

2. The in-vehicle relay device (20) according to claim 1, wherein
the first data includes data that is not transmitted and received between the plurality of in-vehicle devices (10).

3. The in-vehicle relay device (20) according to claim 1 or 2, wherein
the transmission part (24) is configured to transmit, at a timing specified by the external device (2000), a most-recently-acquired first data and a most-recently-acquired second data to the external device (2000) for each type of the first data and the second data.

4. The in-vehicle relay device (20) according to any one of claims 1 to 3, wherein:
the signal includes an indication of a cycle of data transmission;
the first data is acquired from the first in-vehicle device at a cycle of a length equal to or shorter than a half of the cycle of data transmission; and
the transmission part (24) is configured to transmit the first data and the second data to the external device (2000) at the cycle of data transmission.

5. The in-vehicle relay device (20) according to any one of claims 1 to 4, wherein:
the signal includes information on a memory address of the first in-vehicle device; and
the first data is data stored in the memory address of the first in-vehicle device.

6. The in-vehicle relay device (20) according to any one of claims 1 to 5, wherein:
the signal includes identification information on a type of a message transmitted from the first in-vehicle device and information specifying an item of data included in the message; and
the second data is data of the item, the data of the item being included in the message transmitted and received between the plurality of in-vehicle devices.

7. An information processing device (10) connected to an internal network to which a plurality of devices and a relay device (20) are connected, the relay device (20) being configured to relay communication between the plurality of devices, the information processing device (10) comprising:
a transmission part (16) configured to, based on a signal transmitted from an external device (2000) by wireless communication, transmit first data stored in one of the plurality of devices connected to the internal network, and second data transmitted and received between the plurality of devices, to the external device (2000).

8. A relay device (20) configured to relay communication between a plurality of devices (10) connected to an internal network, the relay device (20) comprising:
a transmission part (24) configured to, based on a signal transmitted from an external device (2000) by wireless communication, transmit first data stored in one of the plurality of devices (10) connected to the internal network, and second data transmitted and received between the plurality of devices (10), to the external device (2000).

9. An information processing method, comprising:
receiving, by a relay device (20) configured to relay communication between a plurality of devices (10) connected to an internal network, a signal transmitted from an external device (2000) by wireless communication; and
transmitting, by the relay device (20), first data stored in one of the plurality of devices (10) connected to the internal network and second data transmitted and received between the plurality of devices (10), to the external device (2000) based on the signal.

10. A non-transitory storage medium storing a program executable by a relay device (20), the relay device being configured to relay communication between a plurality of devices (10) connected to an internal network, wherein
when the program is executed by the relay device (20), the program causes the relay device (20) to perform, based on a signal transmitted from an external device (2000) by wireless communication, a process of transmitting first data stored in one of the plurality of devices (10) connected to the internal network and second data transmitted and received between the devices (10) to the external device (2000).

11. An information processing system (1), comprising:
a plurality of devices (10) connected to an internal network;
a wireless communication device; and
a relay device (20) configured to relay communication between the plurality of devices (10), wherein:
the relay device (20) includes a transmission part (24) configured to transmit, based on a signal transmitted from an external device (2000) by wireless communication, first data stored in one of the plurality of devices (10) connected to the internal network and second data transmitted and received between the plurality of devices (10), to the external device (2000) via the wireless communication device;
the wireless communication device is configured to relay communication between the relay device (20) and the external device (2000);
a first device included in the plurality of devices (10) is configured to transmit the first data stored in the first device to the relay device (20) according to a request from the relay device (20); and
a second device included in the plurality of devices (10) is configured to transmit the second data to another one of the plurality of devices (10) via the relay device (20).

12. A vehicle (1001) comprising the in-vehicle relay device according to any one of claims 1 to 5.

13. A vehicle (1001) comprising the information processing system according to claim 11.

14. An external device (2000) disposed outside a vehicle (1001), comprising:
a transmission part (2001) configured to transmit a signal to an in-vehicle relay device (20) that is configured to relay communication between a plurality of in-vehicle devices (10) connected to an in-vehicle network (1000) mounted on the vehicle (1001); and
an acquisition part (2002) configured to acquire first data stored in one of the plurality of in-vehicle devices (10) connected to the in-vehicle network (1000) and second data transmitted and received between the plurality of in-vehicle devices (10), the first data and the second data being acquired by the in-vehicle relay device (20) based on the signal.
